# EUROPEAN PATENT SPECIFICATION

(11) **EP 4 019 227 B1**
(45) Date of publication and mention of the grant of the patent: **09.07.2025**
(21) Application number: 21208392.7
(22) Date of filing: 16.11.2021
(51) Int. Cl.: B29C 65/20, B29C 65/78, E06B 3/96, B29K 27/06

(54) **A SUPPORTING DEVICE FOR SUPPORTING A PROFILED BAR IN A WELDING APPARATUS**
HALTEVORRICHTUNG ZUM HALTEN EINES PROFILSTABES IN EINEM SCHWEISSGERÄT
DISPOSITIF DE SUPPORT POUR SUPPORTER UNE BARRE PROFILÉE DANS UN APPAREIL DE SOUDAGE

(30) Priority: 10.12.2020 IT 202000030410
(43) Date of publication of application: 29.06.2022
(73) Proprietor: Emmegi S.p.A., 41019 Soliera (Modena) (IT)
(72) Inventor: BARBIERI, Gianni, 61032 Fano (Pesaro E Urbino) (IT); BERTOLI, Mirko, 41036 Medolla (Modena) (IT)
(74) Representative: Colò, Chiara

(56) References cited:
- EP-A1- 3 517 279
- DE-A1- 102016 102 240

## Description

This invention relates to a supporting device, also known as "counterblock" for supporting a profiled bar in a welding apparatus. The latter is suitable for joining together profiled bars, particularly in order to obtain door or window frames

The welding apparatus in which the supporting device according to the invention can be mounted is particularly suitable for joining profiled bars made of polyvinyl chloride (PVC), but may also be used for joining together profiled bars made of polymeric material different from PVC, or from composite material, or provided with reinforcing elements made of metallic material. In general, the above-mentioned welding apparatus can be used for joining together profiled bars which can be welded to each other by applying heat and pressure.

Examples of known welding apparatuses are disclosed in EP 3517279 and DE 102016102240.

EP 3517279 discloses a welding apparatus according to the preamble of claim 1 which serves for joining profiled bars made of polymeric material, giving rise to a good quality joint between the profiled bars.

For this purpose, the apparatus disclosed in EP 3517279 comprises a pair of supporting devices or counterblocks for supporting respective ends of two profiles to be welded. Each supporting device comprises a supporting element to which a containment element is fixed, in such a way that the containment element is floating along a direction parallel to a longitudinal axis of the corresponding profiled bar. The containment elements prevent the material which forms the profiled bars, which is heated and softened during welding, from flowing towards the outside of the profiled bars. This prevents the formation of a welding seam visible from the outside of the profiled bars at the zone where the profiled bars are welded.

Each containment element is also provided with a protuberance, which projects towards the longitudinal axis of the corresponding profiled bar for being housed in a seat made close to an end section of the corresponding profiled bar. Owing to the interaction between the protuberances of two containing elements facing each other, a recess is formed at the joint between the profiled bars which may have, for example, a V-shaped geometry. This recess, similar to that which is usually present in the joints between adjacent bars of door and window frames made of wood, gives the joint between the profiled bars an aesthetically pleasing appearance.

With the same supporting device, it is possible to weld together different types of profiled bars, having dimensional and geometrical features not too different from each other. More specifically, in order to pass from welding profiled bars of a certain type to welding profiled bars of a new type, which have dimensional and geometrical features not too different from those of the previous type, it is possible to use the same supporting elements, but it is necessary to replace the containment elements, on each of which the protuberance is obtained. Each containment element is indeed suitable for profiled bars having clearly determined dimensional and geometrical features and cannot be used effectively for welding profiled bars which have different dimensional or geometrical features, even just slightly, from those of the profiled bars for which it was designed.

If supporting devices of the type disclosed in EP 3517279 are used, replacement of a containment element in a supporting device already mounted on the welding apparatus is a relatively long and delicate operation, which must be performed whilst the welding apparatus is stationary and therefore requires a relatively long machine stop and a consequent loss of productivity.

Moreover, in order to mount the new containment element with the sufficient precision it is necessary to posses a particular skill in carrying out fine adjustment operations, which not all operators possess.

Similar drawbacks occur when a worn or broken containment element must be replaced with a new containment element of the same type.

An object of the invention is to improve the supporting devices for supporting profiled bars on a welding apparatus, suitable for joining adjacent profiled bars by welding.

A further object is to provide a supporting device comprising a supporting element which supports a containment element for containing the softened material during welding, wherein the containment element can be replaced quickly, without requiring extended machine stops.

Another object is to provide a supporting device comprising a supporting element which supports a containment element for containing the softened material during welding, wherein the containment element can be replaced simply, even by non-expert operators.

According to the invention, there is provided a supporting device for supporting a profiled bar during a welding operation, comprising a lower supporting element and an upper supporting element movable relative to each other between a clamping position, in which a profiled bar can be locked between the lower supporting element and the upper supporting element, and a disengagement position, in which the profiled bar can be disengaged from the lower supporting element and from the upper supporting element, wherein at least one supporting element selected from the upper supporting element and the lower supporting element comprises: a containment element for containing the softened material of the profiled bar during welding, the containment element having a deflecting protuberance which projects towards a longitudinal axis of the profiled bar for diverting the softened material towards the inside of the profiled bar;
characterized in that said at least one supporting element selected from between the upper supporting element and the lower supporting element further comprises:
a base component, movable along a direction parallel to the longitudinal axis of the profiled bar;
an intermediate component to which the containment element can be fixed, the intermediate component being removably connectable to the base component,
adjusting means for adjusting the position of the containment element relative to the intermediate component.

Owing to the invention, it is possible to replace a containment element of a supporting device in a particularly quick and easy manner. For this purpose, it is sufficient to mount on the base component the intermediate component to which the containment element has been previously fixed.

The position of the containment element may be adjusted by acting on the adjustment means before fixing the intermediate component to the base component. In this way, the adjustment operations can be performed outside the welding apparatus and the assembly formed by the containment element and the intermediate component can be fixed to the base component, already installed on the welding apparatus, after the adjustment operations have already been performed. The assembly formed by the containment element and the intermediate component on the welding apparatus may thus be fixed with just a few simple operations, which even an unskilled operator is able to perform.

This makes it possible to replace a containment element with very limited downtimes of the welding apparatus.

The invention can be better understood and implemented with reference to the accompanying drawings which illustrate a non-limiting example embodiment of it and in which:
Figure 1 is a partly exploded perspective view showing a welding head for joining together two profiled bars;
Figure 2 is a partly exploded perspective view showing a supporting device of the welding head of Figure 1;
Figure 3 is a schematic front view showing a containment element of the supporting device of Figure 2, installed on the supporting device;
Figure 4 is a schematic cross-section, showing a step of positioning two profiled bars to be welded;
Figure 5 is a schematic cross-section like that of Figure 4, showing the profiled bars spaced apart from each other and arranged in a locked position before welding;
Figure 6 is a schematic cross-section like that of Figure 4, showing a softening step of respective end sections of the profiled bars;
Figure 7 is a schematic cross-section like that of Figure 4, showing the profiled bars in an end welding position;
Figure 8 is a schematic perspective view showing end portions of two profiled bars joined to each other by welding.

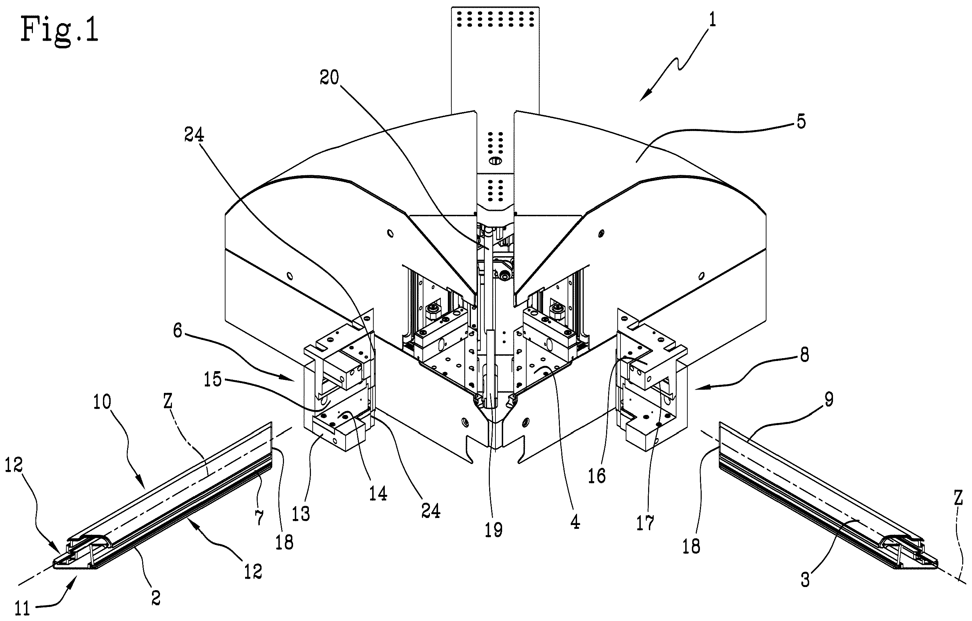

Figure 1 shows a welding head 1 for joining together a profiled bar 2 and a further profiled bar 3 by welding. The profiled bar 2 and the further profiled bar 3 are intended, in particular, to form a door or window frame, after having been joined to other two profiled bars, not shown.

The profiled bar 2 and the further profiled bar 3 may be made of polymeric material, particularly polyvinyl chloride (PVC). However, it is also possible to use the welding head 1 for welding profiled bars made of polymeric materials different from PVC, or composite materials, or having an outer structure made of PVC or another polymeric material and an internal metal reinforcement, for example made of aluminium.

Each profiled bar 2, 3 has a first face 10 and a second face 11, opposite the first face 10. Between the first face 10 and the second face 11 two side faces 12 are interposed, which are opposite one another. While the first face 10 and the second face 11 are intended to remain visible after installation of the door or window in a building, the side faces 12 are not visible after installation.

The first face 10, the second face 11 and the side faces 12 may have various shapes, not necessarily flat.

Each profiled bar 2, 3 extends along a corresponding longitudinal axis Z. Both the profiled bar 2 and the further profiled bar 3 are hollow inside.

The welding head 1 is configured to join the profiled bar 2 to the further profiled bar 3 in such a way that the longitudinal axes Z of the profiled bar 2 and of the further profiled bar 3 are arranged transversally, in particular perpendicularly, relative to each other. The profiled bar 2 and the further profiled bar 3 are therefore joined together to form an angle which, in the example shown, is equal to 90°.

More in detail, the welding head 1 is configured to join the profiled bar 2 to the further profiled bar 3 along a joining perimeter affecting all the faces of the profiled bar 2 and of the further profiled bar 3. In other words, the welding head 1 is configured to form, at the interface between the profiled bar 2 and the further profiled bar 3, a welding bead which extends in a joining zone between the first faces 10, in a joining zone between the second faces 11 and a joining zone between the side faces 12 of the profiled bar 2 and of the further profiled bar 3.

The joining zone between the side faces 12 does not remain visible after installation of the door or window obtained from the profiled bars 2, 3. The presence of a welding bead in this joining zone does not therefore normally create particular difficulties.

As described in more detail below, the welding head 1 makes it possible to minimise, or even prevent, the welding bead from being visible, in particular on the first faces 10 and on the second faces 11 of the profiled bars 2, 3. The welding head 1 may be included in a welding machine comprising four welding heads, each of which is similar to the welding head 1 shown in Figure 1. In this case, the welding machine allows a door or window frame to be rapidly formed, since each welding head is arranged for joining, by welding, two adjacent profiled bars, so that the four corners of the frame are formed simultaneously.

Alternatively, the welding head 1 may form part of a welding machine comprising a single welding head 1, or comprising two welding heads 1. The welding head 1 comprises a base 4 and a casing 5 positioned above the base 4. The base 4 is arranged for restingly receiving the profiled bars to be welded, using supporting devices which will be described below in detail. The casing 5 houses some mechanical devices and some electronic parts which allow the profiled bars to be welded.

Above the base 4 a supporting device 6 is positioned, the supporting device 6 being arranged for supporting an end portion 7 of the profiled bar 2. A further supporting device 8 is also positioned above the base 4, the further supporting device 8 being arranged for supporting a further end portion 9 of the further profiled bar 3.

The supporting device 6 and the further supporting device 8 are also called "counterblocks".

The supporting device 6 and the further supporting device 8 are intended to be fixed to the base 4 by fixing means which may be, for example, of the magnetic type.

Each supporting device 6, 8 comprises a lower supporting element 13, suitable for supporting an end portion 7, 9 of the corresponding profiled bar 2, 3.

In particular, each supporting element 13, which may be, for example, L-shaped, is delimited by a supporting surface 14, suitable for supporting a face, particularly the second face 11, of a profiled bar 2, 3. The supporting surface 14 may be a flat surface, intended to be arranged horizontally during operation of the welding head 1.

Each supporting element 13 is also delimited by a resting surface 15, against which a side face 12 of a profiled bar 2, 3 can rest. The resting surface 15, which may be flat or also have other geometries, is arranged vertically during operation of the welding head 1.

Each supporting device 6, 8 further comprises an upper supporting element 16 for locking a profiled bar 2, 3 on a supporting device 6, 8. The upper supporting element 16 is movable relative to the lower supporting element 13 by movement means, not shown, in a direction of movement which, in the example shown, is vertical. The upper supporting element 16 is in particular movable between a disengagement position, in which a profiled bar 2, 3 can be moved freely between the lower supporting element 13 and the upper supporting element 16, and a clamping position, in which the upper supporting element 16 locks the profiled bar 2, 3 against the lower supporting element 13, so as to prevent movements of the profiled bar 2, 3 relative to the corresponding supporting device 6, 8.

The upper supporting element 16 is suitable for engaging with the first face 10 of a profiled bar 2, 3. In particular, the upper supporting element 16 is delimited by a locking surface 17, which, in the example shown, is arranged horizontally, suitable for abutting against the first face 10.

The supporting device 6 and the further supporting device 8 are movable relative to each other so as to move towards each other, or alternatively move away from each other, the end portion 7 and the further end portion 9. This is made possible by driving means and by further driving means included in the welding head 1. The driving means and the further driving means act respectively on the supporting device 6 and on the further supporting device 8, after they have been positioned on the base 4, in order to move them away from each other or towards each other.

During operation of the welding head 1, the longitudinal axis Z of the profiled bar 2 is arranged transversally, in particular perpendicularly, to the longitudinal axis Z of the further profiled bar 3.

The welding head 1 allows the profiled bar 2 to be joined to the further profiled bar 3 at respective end sections 18, each of which is (in the example shown) arranged on a plane tilted by 45° relative to the longitudinal axis Z of the profiled bar 2 or of the further profiled bar 3.

The welding head 1 comprises an abutment element 19, shaped in particular like a plate, which can be inserted between the end sections 18 of the profiled bar 2 and of the further profiled bar 3 during a positioning step for positioning the profiled bar 2 and the further profiled bar 3 on the welding head 1. In particular, the abutment element 19 can be inserted between the end sections 18 before locking the profiled bar 2 and the further profiled bar 3 respectively in the supporting device 6 and in the further supporting device 8.

The welding head 1 further comprises a heating device which includes a heating element 20, shaped for example like a plate, suitable for being interposed between the end sections 18 of the profiled bar 2 and of the further profiled bar 3, so as to heat the material which forms the profiled bar 2 and the further profiled bar 3, at the end sections 18. The profiled bars 2, 3 are thus locally softened.

Pushing means are furhter for pushing the profiled bar 2 against the further profiled bar 3, in such a way as to apply a pressure which allows the profiled bar 2 to be joined to the further profiled bar 3 at the respective end sections 18 on which the material which forms the profiled bars 2, 3 has been previously softened.

The pushing means may comprise the driving means and the further driving means, not illustrated, which move the supporting device 6 and the further supporting device 8 relative to each other.

The abutment element 19 and the heating element 20 are movable so as to be able to be inserted between the end sections 18 of the profiled bars 2, 3, or alternatively moved away from the end sections 18.

Each supporting device 6, 8 further comprises a pair of containment elements for locally containing the softened material of the profiled bars 2, 3 close to the respective end sections 18, thereby preventing undesired escape of the material after the end sections 18 have interacted with the heating element 20.

In particular, for each supporting device 6, 8 two containment elements 24 may be provided, associated respectively with the lower supporting element 13 and with the upper supporting element 16. The containment element 24 associated with the upper supporting element 16 is arranged for containing the softened material in a joining zone between the profiled bar 2 and the further profiled bar 3 on the first face 10. The containment element 24 associated with the lower supporting element 13 is, on the other hand, arranged for containing the softened material in a joining zone between the profiled bar 2 and the further profiled bar 3 on the second face 11.

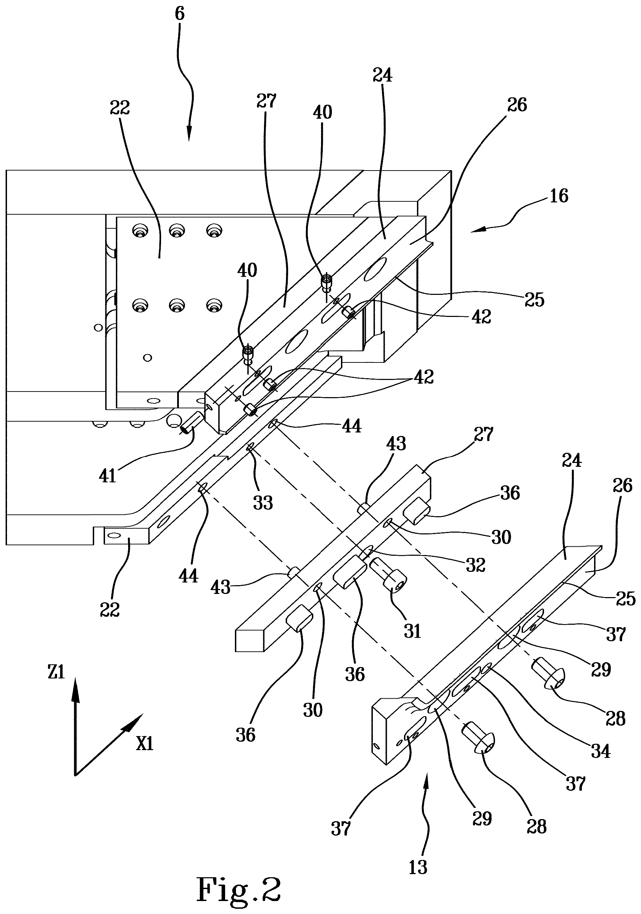

Figure 2 shows the supporting device 6 in which the lower supporting element 13 is shown in an exploded view, whilst the upper supporting element 16 is shown in an assembled configuration.

The further supporting device 8 may have a structure identical to that of the supporting device 6.

Each supporting element 13, 16 comprises a base component 22, which is mounted in a floating manner on the corresponding supporting device 6, 8 so as to be movable in a direction parallel to the longitudinal axis Z of the profiled bar 2 or of the further profiled bar 3.

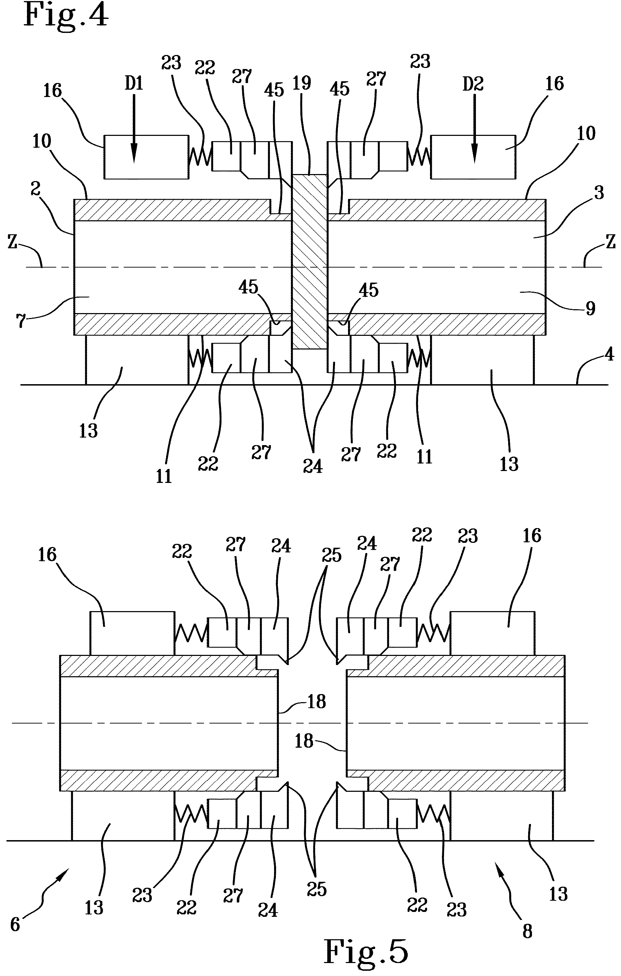

To ensure that each base component 22 is mounted in a floating manner on the support device 6, 8, each base component 22 is associated with an elastic element 23, such as, for example, a spring, visible in Figures 4 to 7, which pushes the corresponding base component 22 parallel to the longitudinal axis Z of the profiled bar 2 or of the further profiled bar 3. In particular, each elastic element 23 of the supporting device 6 pushes the corresponding base component 22 towards the further supporting device 8, that is to say, it keeps the base component 22 in an extended position.

Each base component 22 may be moved, that is to say, retracted, towards a central zone of the profiled bar 2, by applying to each base component 22 a force sufficient to overcome the resistance of the corresponding elastic element 23.

Each supporting element 13, 16 further comprises a containment element 24 for locally containing the softened material of the profiled bars 2, 3 close to the respective end sections 18, thereby preventing unwanted escape of that material after the end sections 18 have interacted with the heating element 20.

In particular, for each supporting device 6, 8 there may be two containing elements 24, which respectively form part of the lower supporting element 13 and the upper supporting element 16.

Each upper containment element 24 has a protuberance 25 which projects towards the longitudinal axis Z of the corresponding profiled bar 2, 3.

Each protuberance 25 is suitable for being received in a seat 45, shown in Figure 4, formed close to the end section 18 of the profiled bar 2 or to the further profiled bar 3.

The seat 45 is made by removing material, for example by milling, from the first face 10 or from the second face 11 of the profiled bar 2 or of the further profiled bar 3.

Each containment element 24 is delimited by an abutment face 26 suitable for abutting against a corresponding abutment face 26 of the further supporting device 8 which supports the further profiled bar 3. The protuberance 25 is arranged in a position adjacent to the contact face 26.

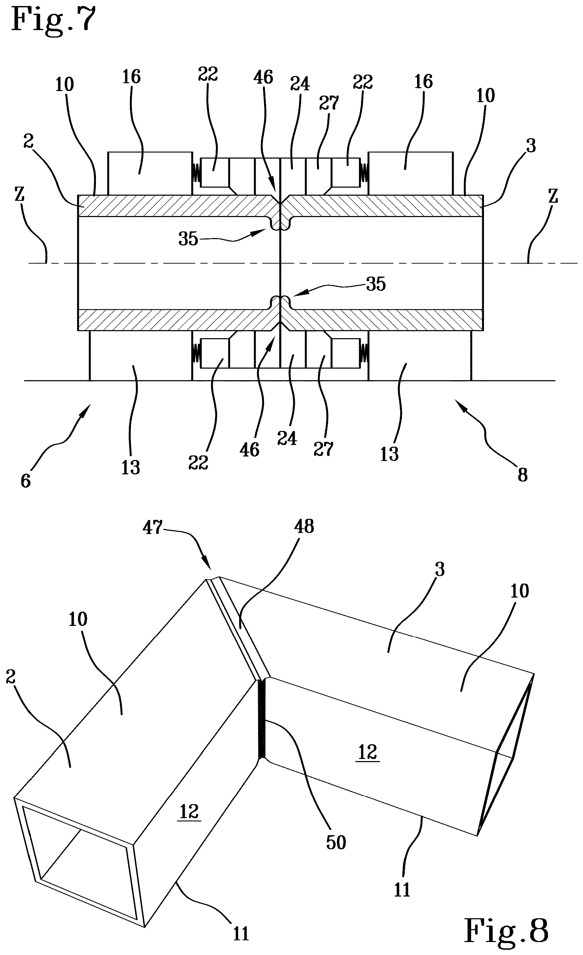

The abutment face 26 defines a welding plane P, shown in Figure 7, on which the profiled bar 2 is intended to be welded to the further profiled bar 3.

In the example shown, in which the profiled bar 2 and the profiled bar 3 are intended to be joined to each other to form an angle of 90°, the welding plane P is inclined by 45° relative to the longitudinal axis Z of the profiled bar 2 and of the further profiled bar 3.

Each supporting element 13, 16 further comprises an intermediate component 27 suitable for being interposed between the containment element 24 and the base component 22.

More specifically, the containment element 24 can be fixed in a removable manner to the intermediate component 27, for example by means of a pair of fixing screws 28. Each fixing screw 28 passes through a through hole 29 made in the containment element 24 and engages in a threaded hole 30 made in the intermediate component 27. In this way, the containment element 24 can be fixed to the intermediate component 27 before the latter is mounted on the welding apparatus.

The number of fixing screws 28 may be selected as desired.

The intermediate component 27 is in turn connectable in a removable manner to the base component 22.

For this purpose, in the example illustrated, there is provided a connecting screw 31 which passes through a through hole 32 made in the intermediate component 27 and engages in a threaded hole 33 made in the base component 22.

An access hole 34 may be formed on the containment element 24 for accessing the connecting screw 31 even when the containment element 24 is already fixed to the intermediate component 27.

Owing to the access hole 34, it is possible to fix the intermediate component 27 to the base component 22, or remove the intermediate component 27 from the base component 22, without having to remove the containment element 24 from the intermediate component 27.

Adjusting means are further provided for adjusting the position of the containment element 24 relative to the intermediate component 27.

The adjustment means can in particular be configured to adjust the position of the containment element 24 relative to the intermediate component 27 along two different adjustment directions parallel to the welding plane P.

The adjustment directions are in particular a vertical direction Z1 and a horizontal direction X1 parallel to the welding plane P.

The adjusting means comprise first adjusting means for adjusting the position of the containment element 24 relative to the intermediate component 27 along the vertical direction Z1 and second adjusting means for adjusting the position of the containment element 24 relative to the intermediate component 27 along the horizontal direction X1.

More specifically, the adjustment means may comprise at least one adjustment protrusion 36 which projects from the intermediate component 27 and is received with clearance in a slot 37 of the containment element 24. In the example shown two or three adjustment protrusions 36 are provided for each intermediate component 27.

Each adjustment protrusion 36 has the shape of a prism with a rectangular base, with rounded corners.

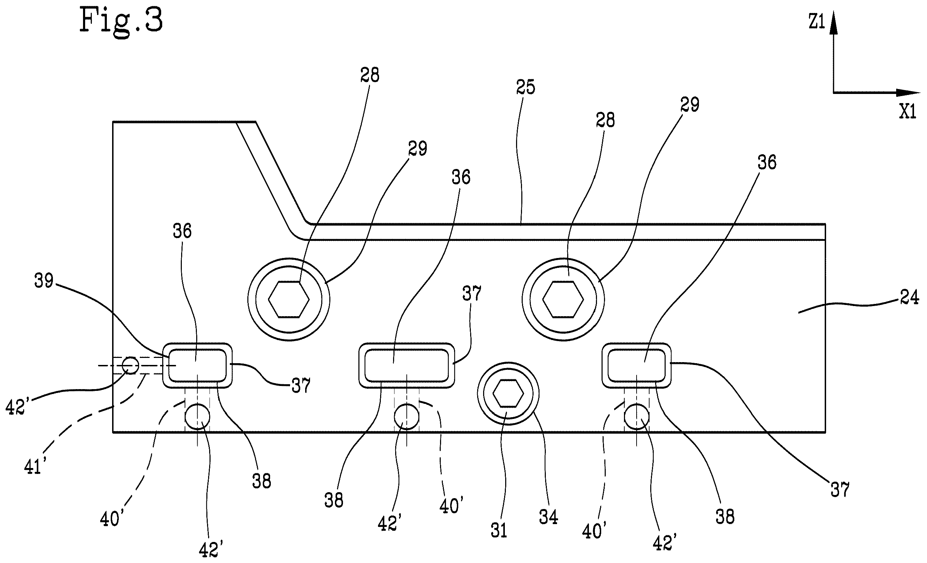

As shown in Figure 3, each adjustment protrusion 36 is delimited by a first face 38, which in the example shown is a substantially horizontal flat face, that is to say, perpendicular to the vertical direction Z1. Each adjustment protrusion 36 is also delimited by a second face 39, which, in the example illustrated, is a substantially vertical flat face, that is to say, perpendicular to the horizontal direction X1.

The first adjustment means may comprise at least a first threaded adjustment element 40, more specifically a threaded grub screw, which is screwed into a hole 40' in the intermediate component 27 and has one end in contact with the first face 38 of the adjustment protrusion 36. The first threaded adjustment element 40 extends along a direction parallel to the vertical direction Z1.

By screwing or unscrewing the first threaded adjustment element 40 relative to the intermediate component 27, the position of the end of the first adjusting element 40 is varied along the vertical direction Z1, that is to say, in the corresponding hole 40'. In this way, it is possible to vary the position of the adjustment protrusion 36 inside the corresponding slot 37, along the vertical direction Z1. Consequently, it is possible to vary the position of the containment element 24 relative to the intermediate component 27 along the vertical direction Z1.

The second adjustment means may comprise at least a second threaded adjustment element 41, more specifically a threaded grub screw, which is screwed into a hole 41' made in the intermediate component 27 and has one end in contact with the second face 39 of the adjustment protrusion 36. The second threaded adjustment element 41 extends along a direction parallel to the horizontal direction X1, like the corresponding hole 41'. By acting on the second threaded adjustment element 41, it is possible to vary the position of the adjustment protrusion 36 inside the corresponding slot 37, along the horizontal direction X1. Consequently, it is possible to vary the position of the containment element 24 relative to the intermediate component 27 along the horizontal direction X1.

In the example shown, for each intermediate component 27 two or three first threaded adjustment elements 40 and a single second threaded adjustment element 41 are provided. More specifically, both the first threaded adjustment element 40 and the second threaded adjustment element 41 act on one of the adjustment protrusions 36. Only a corresponding first threaded adjustment element 40 acts, on the other hand, on another, or other two, adjustment protrusions 36.

Locking elements 42 are provided for locking the first threaded adjustment element 40 or the second threaded adjustment element 41 after the containment element 24 has been correctly positioned relative to the intermediate component 27. The locking elements 42 may comprise respective threaded grub screws which extend inside respective holes 42' perpendicularly to the first threaded adjustment element 40 and/or to the second threaded adjustment element 41 and lock the first threaded adjustment element 40 or the second threaded adjustment element 41 by coming into contact with the threaded adjustment elements.

In the example shown, the containment element 24 is mounted on the base component 27, outside the welding apparatus, by positioning the adjustment projections 36 inside the corresponding slots 37. The position of the containment element 24 relative to the base component 27 is then adjusted by acting on the first threaded adjustment elements 40 and on the second threaded adjustment element 41.

In particular, by means of the second threaded adjustment element 41 it is possible to correctly position the containment element 24 along the horizontal direction X1, whilst by means of the first threaded adjustment elements 41 it is possible to correctly position the containing element 24 along the vertical direction Z1.

The first threaded adjustment elements 40 may be positioned differently from each other, for example in such a way that one of the first threaded adjustment elements 40 penetrates more in the containment element 24 compared with another first threaded adjustment element 40. In this way, it is possible to vary the inclination of the containment element 24 relative to the intermediate component 27 about a horizontal axis.

Once the containment element 24 has been correctly positioned relative to the intermediate component 27, it is possible to lock the first threaded adjustment elements 40 and the second threaded adjustment element 41 owing to the locking elements 42. Moreover, the containment element 24 is fixed to the intermediate component 27 by the fixing screws 28.

The assembly formed by the containment element 24 and by the intermediate component 27, already correctly positioned relative to each other, may now be fixed to the base component 22 owing to the connecting screw 31.

Reference means are further provided for mounting the intermediate component 27 in a predetermined position on the base component 22.

The reference means may comprise a pair of pins 43 fixed relative to the intermediate component 27, suitable for engaging in corresponding holes 44 of the base component 22.

Owing to the pins 43 and the holes 44, the assembly formed by the containment element 24 and by the intermediate component 27 may be mounted in a repeatable manner on the base component 22.

From the foregoing, it is evident that the containment element 24 can be replaced quickly and easily when necessary. For this purpose, it is sufficient to fix the assembly formed by the containment element 24 and by the intermediate component 27 to the base component 22 by means of the connecting screw 31, after having correctly positioned the above-mentioned assembly on the base component 22 owing to the reference means.

The adjustment operations on the containment element 24 can be performed outside the welding apparatus, mounting the containment element 24 on the intermediate component 27, in such a way as to prevent extended machine stoppages.

The operation of the welding head 1 is described below, with reference to Figures 4 to 7. These drawings are schematic cross-sections each of which is taken along the vertical planes which contain the longitudinal axes Z of the profiled bar 2 and of the profiled bar 3, respectively. The cross-section planes have then each been rotated by 45° away from each other, so as to obtain a cross-section lying on the plane of the sheet.

The profiled bar 2 and the further profiled bar 3 are prepared beforehand, by cutting them to the desired length and forming end sections 18 according to the desired shape. In the example of Figure 1, the profiled bars 2, 3 are cut at 45° relative to the corresponding longitudinal axis Z, so as to form end sections 18 each of which lies in a plane at an angle of 45° to the longitudinal axis Z of the respective profiled bar 2, 3.

After cutting, the seats 45 are made on the first face 10 and on the second face 11 of each profiled bar 2, 3.

As described in more detail below, the seats 45 have the function of receiving the material of the welding bead which will be formed in a joining zone between the profiled bars 2, 3 respectively on the first faces 10 and on the second faces 11.

The seats 45 are formed upstream of the welding head 1, in particular upstream of the welding apparatus in which the welding head 1 is included. This avoids complicating the structure of the welding head 1 and/or the welding apparatus, which does not need to comprise complicated material removal devices, nor devices for removing chippings.

The profiled bar 2 and the further profiled bar 3 are then positioned on the welding head 1. In particular, as shown in Figure 4, the profiled bar 2 is rested on the lower supporting element 13 of the supporting device 6, whilst the further profiled bar 3 is rested on the lower supporting element 13 of the further supporting device 8.

Both the upper supporting element 16 of the supporting device 6 and the upper supporting element 16 of the further supporting device 8 are still in the disengagement position, that is to say, in the position in which the profiled bars 2, 3 are free to move relative to the upper supporting element 16 and to the lower supporting element 13 of the corresponding supporting device 6, 8.

The abutment element 19 guarantees the correct positioning of the profiled bars 2, 3, between which it is interposed. For that purpose, the end sections 18 of the bar 2 and of the further profiled bar 3 are brought to abut against the contact element 19, on opposite sides of the latter.

A positioning step is thus carried out in which the profiled bars 2, 3 are positioned in a repetitive manner on the welding head 1, by arranging them in a predetermined position relative to the abutment element 19, with which the end sections 18 are in contact.

As a result of contact between the end sections 18 and the abutment element 19, the containment elements 24 (whose ends are normally in a more advanced position than the end sections 18) are moved backwards along the profiled bar 2 or the further bar 3. This occurs because the abutment element 19 exerts a sufficient force on the containment elements 24 to overcome the force of the elastic elements 23.

For this reason, towards the end of the positioning step, as shown in Figure 4, the containment elements 24 are in contact with the abutment element 19. The corresponding protuberances 25 are housed in the seats 45.

At this point, the upper supporting element 16 of the supporting device 6 is moved in the direction D1 shown in Figure 4 and displaced towards the lower supporting element 13 of the supporting device 6, until reaching the clamping position, in which the end portion 7 of the profiled bar 2 is locked on the supporting device 6.

Similarly, the further profiled bar 3 is locked between the lower supporting element 13 and the upper supporting element 16 of the further supporting device 8, by moving the upper supporting element 16 in the direction D2 until reaching the clamping position.

The supporting device 6 and the further supporting device 8 are now moved away from each other to move them to the position of Figure 5. In this way, the end sections 18 of the profiled bar 2 and of the further profiled bar 3 disengage from the abutment element 19, which can thus be moved away from the profiled bars 2, 3 and repositioned in the casing 5.

It should be noted that, after the abutment element 19 has moved away from the profiled bars 2, 3, the elastic element 23 associated with each containment element 24 pushes the corresponding containment element 24 beyond the end section 18 of the respective profiled bar 2, 3.

Summing up, the step described above with reference to Figure 5 can be defined as a step of locking the profiled bars 2, 3 on the corresponding supporting device 6, 8, moving away the profiled bars 2, 3 from each other and removing the abutment element 19.

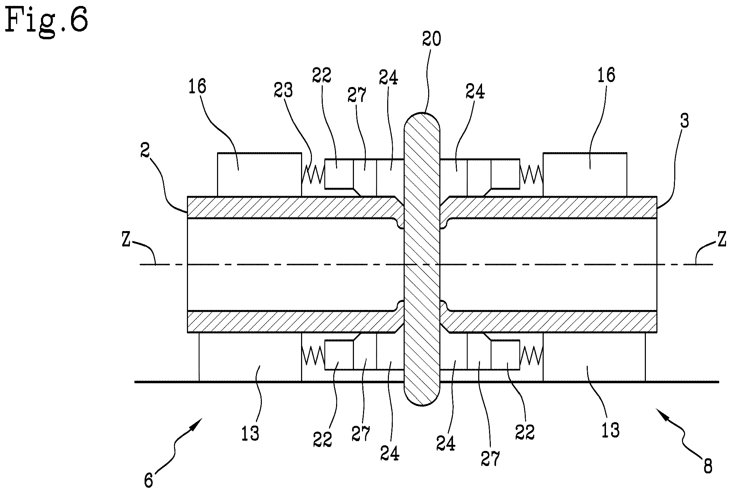

Subsequently, as shown in Figure 6, the heating element 20 is moved outside the casing 5 and inserted between the profiled bar 2 and the further profiled bar 3.

The driving means associated with the supporting device 6 move the profiled bar 2 for bringing the end section 18 of the profiled bar 2 into contact with the heating element 20. Similarly, the further driving means associated with the further supporting device 8 bring the end section 18 of the further profiled bar 3 into contact with the heating element 20.

During this step, the heating element 20 is heated to a predetermined temperature, so as to transfer heat to the end sections 18 of the profiled bar 2 and of the further bar 3 with which it is in contact. The material which forms the bar 2 and the further profiled bar 3 is therefore brought to a relatively high temperature and consequently softened close to the end sections 18. As the material forming the profiled bar 2 and the further profiled bar 3 is softened close to the end sections 18, the driving means acting on the supporting device 6 further push the profiled bar 2 towards the heating element 20, moving the profiled bar 2 with a controlled speed. The profiled bar 2 is consequently further moved close to the heating element 20, in such a way as to soften a stretch of profiled bar 2 having a predetermined length, measured starting from the original end section 18.

Similarly, the further driving means associated with the further supporting device 8 push the further profiled bar 3 towards the heating element 20, by moving the further profiled bar 3 with a controlled speed. A stretch of the further profiled bar 3 having a predetermined length, measured starting from the corresponding original end section 18, is thus softened.

The step described above may be defined as a step of softening the material which forms the profiled bar 2 and the further profiled bar 3 close to the end sections 18.

During the softening step, the containing elements 24 are pushed in contact with the heating element 20. The containment elements 24 prevent the softened material from flowing above the first face 10 and below the second face 11.

The protuberances 25 are housed in the seats 45 of the profiled bar 2 and in the further profiled bar 3.

The protuberances 25 move the softened material towards the inside of the profiled bars 2, 3, that is to say, towards the longitudinal axis Z of the profiled bar 2 and of the further profiled bar 3. In other words, the protuberances 25 act as deflectors which divert the softened material, moving it away from the first face 10 and from the second face 11 and moving it towards the inside of the profiled bars 2, 3, which are hollow inside.

After the softening step, that is to say, after a stretch of predetermined length of the profiled bar 2 and of the further profiled bar 3 has been softened, the supporting device 6 and the further supporting device 8 move away from the heating element 20. Consequently, the profiled bars 2, 3 detach from the heating element 20, which may now be withdrawn inside the casing 5. Subsequently, the supporting device 6 and the further supporting device 8, owing to the corresponding driving means and further driving means, push the profiled bar 2 and the further profiled bar 3 against each other, as shown in Figure 7. The end sections 18 of the profiled bar 2 and of the further profiled bar 3 are thus brought into contact with each other.

After the end sections 18 of the profiled bar 2 and of the further profiled bar 3 have been brought into contact with each other, the profiled bar 2 and the further profiled bar 3 are further moved towards each other. In that way, a pressure is applied on the profiled bar 2 and on the further profiled bar 3 such as to weld the profiled bar 2 to the further profiled bar 3. The welding is performed by joining of portions of softened material close to the end sections 18.

During this step, which may be defined as a welding step, the containment elements 24 are pushed into contact with each other and are arranged in a position of mutual contact.

The protuberances 25 are adjacent to each other and together form a penetrating portion 46 which penetrates into the portions of softened material already in contact with each other.

The containment elements 24 thus allow the softened material of the profiled bar 2 and the further profiled bar 3 to be contained. In this way, respective welding beads 35 extending inside the profiled bars 2, 3 are generated in the joining zones between the first faces 10 and the second faces 11. The welding beads 35 are shaped by the protuberances 25, as described in more detail below.

After the profiled bar 2 and the further profiled bar 3 have been pushed against each other for a desired time, the welding step ends. The product obtained by joining the profiled bar 2 and the further profiled bar 3 can now be removed from the welding head 1.

In this way, a joint 47 shown schematically in Figure 8 is obtained between the profiled bar 2 and the further profiled bar 3. It should be noted that in the joining zone between the first faces 10 and the second faces 11 a recess 48 is defined having a cross-section in the shape of a "V", that is to say, a shape matching the shape of the penetrating portion 46. The welding bead 35 is not visible from the outside in the joining zone.

In the joining zones between the side faces 12, on the other hand, lateral welding beads 50 are present, one of which is shown in Figure 8. The lateral welding beads 50 are intended to be covered after installation of the door or window frame, for example by a wall or by glass, and their presence is not therefore problematic.

The recesses 48 may also have different shapes from that shown in Figure 8. In fact, the shape of the recesses 48 depends on the shape of the protuberances 25, so that modifying the shape of the protuberances 25 also changes the geometry of the recess 48.

The containment elements 24 make it possible to obtain joining zones having an aesthetically pleasing appearance, in which the welding bead is practically not visible from the outside.

## Claims

1. A supporting device for supporting a profiled bar (2, 3) during a welding operation, comprising a lower supporting element (13) and an upper supporting element (16) movable relative to each other between a clamping position, in which a profiled bar (2, 3) can be locked between the lower supporting element (13) and the upper supporting element (16), and a disengagement position, in which the profiled bar (2, 3) can be disengaged from the lower supporting element (13) and from the upper supporting element (16), wherein at least one supporting element selected from between the upper supporting element (16) and the lower supporting element (13) comprises:
- a containment element (24) for containing the softened material of the profiled bar (2, 3) during welding, the containment element (24) having a deflecting protuberance (25) which projects towards a longitudinal axis (Z) of the profiled bar (2, 3) for diverting the softened material towards the inside of the profiled bar (2, 3);
**characterized in that** said at least one supporting element selected from between the upper supporting element (16) and the lower supporting element (13) further comprises:
- a base component (22), movable along a direction parallel to the longitudinal axis (Z) of the profiled bar (2, 3);
- an intermediate component (27) to which the containment element (24) can be fixed, the intermediate component (27) being removably connectable to the base component (22),
- adjusting means for adjusting the position of the containment element (24) relative to the intermediate component (27).

2. The supporting device according to claim 1, wherein the containment element (24) has an abutment face (26) suitable for abutting against an abutment face of a further supporting device for defining a welding plane (P) between two adjacent bars, the adjusting means being configured to adjust the position of the containment element (24) relative to the intermediate component (27) along two adjustment directions that are distinct from each other and parallel to the welding plane (P).

3. The supporting device according to claim 2, wherein the adjusting means comprise first adjusting means (40) for adjusting the position of the containment element (24) relative to the intermediate component (27) along a vertical direction (Z1) and second adjusting means (41) for adjusting the position of the containment element (24) relative to the intermediate component (27) along a horizontal direction (X1) parallel to the welding plane (P).

4. The supporting device according to claim 2 or 3, wherein the adjusting means (40) comprise at least one adjusting protrusion (36) which projects from the intermediate component (27) and is received with clearance in a slot (37) of the containment element (24), the adjusting protrusion (36) having a first face (38) perpendicular to a first direction (Z1) of said two adjustment directions and/or a second face (39) perpendicular to a second adjustment direction (X1) of said two adjustment directions.

5. The supporting device according to claim 4, wherein the adjusting means comprise a first threaded adjusting element (40) screwed into the containment element (24) and having an end in contact with the first face (38) for adjusting the position of the containment element (24) along the first adjustment direction (Z1), the adjusting means further comprising a second threaded adjusting element (41) screwed into the containment element (24) and comprising an end in contact with the second face (39) for adjusting the position of the containment element (24) along the second adjustment direction (X1).

6. The supporting device according to claim 5, wherein the first threaded adjusting element (40) and the second threaded adjusting element (41) are associated with respective locking elements (42) for locking the first threaded adjusting element (40) and the second threaded adjusting element (41) in respective desired positions, the locking elements (42) optionally comprising respective threaded elements which come into contact with the first threaded adjusting element (40) and, respectively, with the second threaded element (41) to prevent rotation thereof.

7. The supporting device according to any one of claims 4 to 6, wherein at least two adjusting protrusions (36) are provided, the position of the containment element (24) relative to one of the two adjusting protrusions (36) being adjustable in a way different from the position of the containment element (24) relative to the other adjusting protrusion (36), so that the containment element (24) can be positioned on the welding plane (P) in a tilted position relative to the intermediate component (27).

8. The supporting device according to any preceding claim, and further comprising reference means for assembling the intermediate component (27) in a predetermined position on the base component (22).

9. The support device according to claim 8, wherein the reference means comprise a pair of pins (43) fixed relative to a component selected from between the intermediate component (27) and the base component (22), the pins (43) of the pair of pins engaging in corresponding holes (44) of another component selected from between the base component (22) and the intermediate component (27).

10. The supporting device according to any preceding claim, and further comprising at least one fixing element (28) for removably fixing the containment element (24) to the intermediate component (27), optionally the fixing element being a threaded element.

11. The device according to any preceding claim, and further comprising at least one threaded connecting element (31) which connects the intermediate component (27) to the base component (22), the threaded connecting element (31) being accessible from the containment component (24) so as to allow the intermediate component (27) to be removed from, or connected to, the base component (22), without detaching the containing element (24) from the intermediate component (27).

## Patentansprüche

1. Haltevorrichtung zum Halten eines Profilstabs (2, 3) während eines Schweißvorgangs, umfassend ein unteres Halteelement (13) und ein oberes Halteelement (16), die relativ zueinander zwischen einer Klemmposition, in der ein Profilstab (2, 3) zwischen dem unteren Halteelement (13) und dem oberen Halteelement (16) festgespannt werden kann, und einer Löseposition, in der der Profilstab (2, 3) vom unteren Halteelement (13) und vom oberen Halteelement (16) gelöst werden kann, bewegbar sind, wobei mindestens ein Halteelement, ausgewählt zwischen dem oberen Halteelement (16) und dem unteren Halteelement (13), Folgendes umfasst:
- ein Fassungselement (24) zum Fassen des erweichten Materials des Profilstabs (2, 3) während des Schweißens, wobei das Fassungselement (24) eine sich beugende Ausstülpung (25) aufweist, die hinführend zu einer Längsachse (Z) des Profilstabs (2, 3) hervorspringt, um das erweichte Material hinführend zur Innenseite des Profilstabs (2, 3) abzulenken, **dadurch gekennzeichnet, dass** das eine Halteelement, das zwischen dem oberen Halteelement (16) und dem unteren Halteelement (13) ausgewählt ist, zudem Folgendes umfasst:
- eine Basiskomponente (22), die entlang einer Richtung parallel zur Längsachse (Z) des Profilstabs (2, 3) bewegbar ist;
- eine Zwischenkomponente (27), an der das Fassungselement (24) fixiert werden kann, wobei die Zwischenkomponente (27) entfernbar mit der Basiskomponente (22) verbindbar ist;
- Justiermittel, um die Position des Fassungselements (24) relativ zur Zwischenkomponente (27) zu justieren.

2. Haltevorrichtung nach Anspruch 1, wobei das Fassungselement (24) eine Anschlagsseitenfläche (26) aufweist, die geeignet ist, um gegen eine Anschlagsseitenfläche einer weiteren Haltevorrichtung anzuschlagen, um eine Schweißebene (P) zwischen zwei angrenzenden Stäben zu definieren, wobei die Justiermittel ausgelegt sind, um die Position des Fassungselements (24) relativ zur Zwischenkomponente (27) entlang zweiter Justierrichtungen zu justieren, die voneinander unterschieden sind und parallel zur Schweißebene (P) verlaufen.

3. Haltevorrichtung nach Anspruch 2, wobei die Justiermittel erste Justiermittel (40) umfassen, um die Position des Fassungselements (24) relativ zur Zwischenkomponente (27) entlang einer vertikalen Richtung (Z1) zu justieren, und zweite Justiermittel (41), um die Position des Fassungselements (24) relativ zur Zwischenkomponente (27) entlang einer horizontalen Richtung (X1) parallel zur Schweißebene (P) zu justieren.

4. Haltevorrichtung nach Anspruch 2 oder 3, wobei die Justiermittel (40) mindestens einen Justiervorsprung (36) umfassen, der von der Zwischenkomponente (27) hervorsteht und mit Abstand in einem Schlitz (37) des Fassungselements (24) aufgenommen wird, wobei der Justiervorsprung (36) eine erste Seitenfläche (38) aufweist, die senkrecht zu einer ersten Richtung (Z1) der beiden Justierrichtungen verläuft, und/oder eine zweite Seitenfläche (39), die senkrecht zu einer zweiten Justierrichtung (X1) der beiden Justierrichtungen verläuft.

5. Haltevorrichtung nach Anspruch 4, wobei die Justiermittel ein erstes Gewindejustierelement (40) umfassen, das ins Fassungselement (24) eingeschraubt ist und ein Ende in Kontakt mit der ersten Seitenfläche (38) aufweist, um die Position des Fassungselements (24) entlang der ersten Justierrichtung (Z1) zu justieren, wobei die Justiermittel zudem ein zweites Gewindejustierelement (41) umfassen, das ins Fassungselement (24) eingeschraubt ist und ein Ende in Kontakt mit der zweiten Seitenfläche (39) umfasst, um die Position des Fassungselements (24) entlang der zweiten Justierrichtung (X1) zu justieren.

6. Haltevorrichtung nach Anspruch 5, wobei das erste Gewindejustierelement (40) und das zweite Gewindejustierelement (41) mit jeweiligen Festspannelementen (42) assoziiert sind, um das erste Gewindejustierelement (40) und das zweite Gewindejustierelement (41) in jeweiligen gewünschten Positionen festzuspannen, wobei die Festspannelemente (42) optional jeweilige Gewindeelemente umfassen, die mit dem ersten Gewindejustierelement (40) und jeweils mit dem zweiten Gewindejustierelement (41) in Kontakt kommen, um deren Drehung zu verhindern.

7. Haltevorrichtung nach einem der Ansprüche 4 bis 6, wobei mindestens zwei Justiervorsprünge (36) bereitgestellt sind und die Position des Fassungselements (24) relativ zu einem der beiden Justiervorsprünge (36) auf eine andere Weise als die Position des Fassungselements (24) relativ zum anderen Justiervorsprung (36) justierbar ist, sodass das Fassungselement (24) auf der Schweißebene (P) in einer Kippstellung relativ zur Zwischenkomponente (27) positioniert werden kann.

8. Haltevorrichtung nach einem der vorhergehenden Ansprüche, und zudem umfassend Referenzmittel zum Montieren der Zwischenkomponente (27) in einer vorbestimmten Position auf der Basiskomponente (22).

9. Haltevorrichtung nach Anspruch 8, wobei die Referenzmittel ein Paar Zapfen (43) umfassen, die relativ zu einer Komponente fixiert sind, die zwischen der Zwischenkomponente (27) und der Basiskomponente (22) ausgewählt ist, wobei die Zapfen (43) des Paars von Zapfen in entsprechende Löcher (44) der anderen zwischen der Basiskomponente (22) und der Zwischenkomponente (27) ausgewählten Komponente eingreifen.

10. Haltevorrichtung nach einem der vorhergehenden Ansprüche, und zudem umfassend mindestens ein Fixierelement (28) zum entfernbaren Fixieren des Fassungselements (24) an der Zwischenkomponente (27), wobei das Fixierelement optional ein Gewindeelement ist.

11. Vorrichtung nach einem der vorhergehenden Ansprüche, und zudem umfassend mindestens ein Gewindeverbindungselement (31), das die Zwischenkomponente (27) mit der Basiskomponente (22) verbindet, wobei das Gewindeverbindungselement (31) von der Fassungskomponente (24) zugänglich ist, sodass die Zwischenkomponente (27) von der Basiskomponente (22) entfernt oder mit dieser verbunden werden kann, ohne das Fassungselement (24) von der Zwischenkomponente (27) zu lösen.

## Revendications

1. Dispositif de support pour supporter une barre profilée (2, 3) pendant une opération de soudage, comprenant un élément de support inférieur (13) et un élément de support supérieur (16) mobiles l'un par rapport à l'autre entre une position de serrage, dans laquelle une barre profilée (2, 3) peut être verrouillée entre l'élément de support inférieur (13) et l'élément de support supérieur (16), et une position de désengagement, dans laquelle la barre profilée (2, 3) peut être désengagée de l'élément de support inférieur (13) et de l'élément de support supérieur (16), dans lequel au moins un élément de support sélectionné entre l'élément de support supérieur (16) et l'élément de support inférieur (13) comprend :
- un élément de confinement (24) pour contenir le matériau ramolli de la barre profilée (2, 3) pendant le soudage, l'élément de confinement (24) ayant une protubérance déflectrice (25) qui fait saillie vers un axe longitudinal (Z) de la barre profilée (2, 3) pour dévier le matériau ramolli vers l'intérieur de la barre profilée (2, 3) ;
**caractérisé en ce que** ledit au moins un élément de support sélectionné entre l'élément de support supérieur (16) et l'élément de support inférieur (13) comprend en outre :
- un composant de base (22), mobile le long d'une direction parallèle à l'axe longitudinal (Z) de la barre profilée (2, 3) ;
- un composant intermédiaire (27) auquel l'élément de confinement (24) peut être fixé, le composant intermédiaire (27) pouvant être connecté de manière amovible au composant de base (22),
- des moyens de réglage pour régler la position de l'élément de confinement (24) par rapport au composant intermédiaire (27).

2. Dispositif de support selon la revendication 1, dans lequel l'élément de confinement (24) a une face de butée (26) appropriée pour buter contre une face de butée d'un autre dispositif de support pour définir un plan de soudage (P) entre deux barres adjacentes, les moyens de réglage étant configurés pour régler la position de l'élément de confinement (24) par rapport au composant intermédiaire (27) le long de deux directions de réglage qui sont distinctes l'une de l'autre et parallèles au plan de soudage (P).

3. Dispositif de support selon la revendication 2, dans lequel les moyens de réglage comprennent des premiers moyens de réglage (40) pour régler la position de l'élément de confinement (24) par rapport au composant intermédiaire (27) le long d'une direction verticale (Z1) et des seconds moyens de réglage (41) pour régler la position de l'élément de confinement (24) par rapport au composant intermédiaire (27) le long d'une direction horizontale (X1) parallèle au plan de soudage (P).

4. Dispositif de support selon la revendication 2 ou 3, dans lequel les moyens de réglage (40) comprennent au moins une protubérance de réglage (36) qui fait saillie à partir du composant intermédiaire (27) et est reçue avec du jeu dans une fente (37) de l'élément de confinement (24), la protubérance de réglage (36) ayant une première face (38) perpendiculaire à une première direction (Z1) desdites deux directions de réglage et/ou une seconde face (39) perpendiculaire à une seconde direction de réglage (X1) desdites deux directions de réglage.

5. Dispositif de support selon la revendication 4, dans lequel les moyens de réglage comprennent un premier élément de réglage fileté (40) vissé dans l'élément de confinement (24) et ayant une extrémité en contact avec la première face (38) pour régler la position de l'élément de confinement (24) le long de la première direction de réglage (Z1), les moyens de réglage comprenant en outre un second élément de réglage fileté (41) vissé dans l'élément de confinement (24) et comprenant une extrémité en contact avec la seconde face (39) pour régler la position de l'élément de confinement (24) le long de la seconde direction de réglage (X1).

6. Dispositif de support selon la revendication 5, dans lequel le premier élément de réglage fileté (40) et le second élément de réglage fileté (41) sont associés à des éléments de verrouillage (42) respectifs pour verrouiller le premier élément de réglage fileté (40) et le second élément de réglage fileté (41) dans des positions souhaitées respectives, les éléments de verrouillage (42) comprenant éventuellement des éléments filetés respectifs qui viennent en contact avec le premier élément de réglage fileté (40) et, respectivement, avec le second élément fileté (41) pour empêcher leur rotation.

7. Dispositif de support selon l'une quelconque des revendications 4 à 6, dans lequel au moins deux protubérances de réglage (36) sont prévues, la position de l'élément de confinement (24) par rapport à l'une des deux protubérances de réglage (36) étant réglable d'une manière différente de la position de l'élément de confinement (24) par rapport à l'autre saillie de réglage (36), de sorte que l'élément de confinement (24) peut être positionné sur le plan de soudage (P) dans une position inclinée par rapport au composant intermédiaire (27).

8. Dispositif de support selon l'une quelconque des revendications précédentes, et comprenant en outre des moyens de référence pour assembler le composant intermédiaire (27) dans une position prédéterminée sur le composant de base (22).

9. Dispositif de support selon la revendication 8, dans lequel les moyens de référence comprennent une paire de broches (43) fixes par rapport à un composant sélectionné entre le composant intermédiaire (27) et le composant de base (22), les broches (43) de la paire de broches s'engageant dans des trous (44) correspondants d'un autre composant sélectionné entre le composant de base (22) et le composant intermédiaire (27).

10. Dispositif de support selon l'une quelconque des revendications précédentes, et comprenant en outre au moins un élément de fixation (28) pour fixer de manière amovible l'élément de confinement (24) au composant intermédiaire (27), éventuellement l'élément de fixation étant un élément fileté.

11. Dispositif selon l'une quelconque des revendications précédentes, et comprenant en outre au moins un élément de connexion fileté (31) qui connecte le composant intermédiaire (27) au composant de base (22), l'élément de connexion fileté (31) étant accessible à partir du composant de confinement (24) de manière à permettre au composant intermédiaire (27) d'être retiré du ou connecté au composant de base (22), sans détacher l'élément de confinement (24) du composant intermédiaire (27).
